# EUROPEAN PATENT APPLICATION

(11) **EP 4 600 444 A1**
(43) Date of publication of application: **13.08.2025**
(21) Application number: 24382115.4
(22) Date of filing: 06.02.2024
(51) Int. Cl.: E04H 6/02, F24S 25/11, F24S 25/12, H02S 20/10

(54) **CANOPY**

(71) Applicant: Urven Solutions, S.L., 08211 Castellar del Vallès Barcelona (ES)
(72) Inventor: CARRERAS NICOLAU, Josep, 08024 BARCELONA (ES); MORENO CALDERÓN, Antonio, 08211 CASTELLAR DEL VALLÈS (ES)
(74) Representative: Galbaian S.Coop.

(57) **Abstract**

Canopy (100) comprising a cover (1) comprising a plurality of photovoltaic modules (2) and electrical wiring associated with said photovoltaic modules (2). The canopy (100) further comprises a support structure (3) on which the cover (1) rests and comprises at least one pillar (4). The cover (1) comprises at least one main arm (5) attached to the pillar (4) and a plurality of profiles attached to said main arm (5) forming a skeleton supporting the plurality of photovoltaic modules (2). The pillar (4) is a monobloc piece of reinforced concrete comprising an interior wiring channel with an inlet at the top and at least one outlet. The electrical wiring passes through the pillar (4) through said wiring channel.

## Description

### TECHNICAL FIELD

The present invention relates to canopies intended to shelter vehicles and/or persons from the sun and rain, and more specifically to canopies comprising photovoltaic modules on the roof.

### PRIOR ART

Traditional canopies comprise a cover to protect vehicles and/or people from the sun and rain, and pillars that raise said cover above ground level. This type of canopies are often used in petrol stations, carports, car parks, etc. Thanks to new technologies, the desire to reduce environmental impact and, above all, the rise of electric vehicles, solar panels are beginning to be used on canopy covers.

In this regard, US20180248508A1 describes a canopy for a petrol station comprising a cover comprising a plurality of photovoltaic modules with associated electrical wiring, combined with decorative (non-photovoltaic) modules. The canopy also comprises a support structure formed by several pillars that raise and support the cover. The cover comprises several main arms, each main arm being attached to two spaced pillars, and a plurality of profiles attached to these main arms, forming the skeleton supporting the plurality of photovoltaic and decorative modules.

### DISCLOSURE OF THE INVENTION

An object of the invention is to provide a canopy, as defined in the claims.

The canopy of the invention comprises a cover comprising a plurality of photovoltaic modules and electrical wiring associated with said photovoltaic modules. The canopy also comprises a support structure on which the cover rests and comprises at least one pillar. The canopy comprises at least one main arm attached to the pillar and a plurality of profiles attached to said main arm forming a skeleton supporting the plurality of photovoltaic modules.

The pillar is a monobloc piece of reinforced concrete comprising an internal wiring channel with an inlet at the top and at least one outlet. The electrical wiring passes through said pillar through the wiring channel.

With the canopy of the invention, apart from protecting vehicles and/or people from the sun and rain, it is possible to generate electricity, either for the use of the canopy itself, to recharge electric vehicles parked in the canopy and/or to distribute the surplus energy generated by the photovoltaic modules, in an ergonomic, clean and efficient manner. Likewise, the canopy of the invention is a safe canopy as the photovoltaic modules are electrically insulated thanks to the reinforced concrete pillar and the electrical wires associated with said photovoltaic modules are protected inside the pillar, preventing users from accessing the electrical wiring, minimising the risk of accidents. On the other hand, the fact that the pillar is a monoblock makes it easy to transport and facilitates the assembly of the canopy.

These and other advantages and features of the invention will become apparent in view of the figures and the detailed description of the invention.

### DESCRIPTION OF THE DRAWINGS

Figure 1 shows a perspective view of a car park for motor vehicles comprising two canopies according to the invention, wherein part of the pillars are embedded in the ground, and wherein there is a plurality of parked cars and a plurality of sockets for charging electric vehicles.
Figure 2 shows a perspective view of a double wing canopy according to one embodiment of the invention before it is anchored or embedded in the ground.
Figure 3 shows the canopy of Figure 2 but without the photovoltaic modules, showing the skeleton of the cover of the canopy.
Figure 4 shows an exploded view of the assembly of a pillar and the main arms associated with the pillar, of the canopy of Figure 2.
Figure 5A shows a sectional view of the pillar of the canopy according to an embodiment of the invention.
Figure 5B shows a side view of the pillar of Figure 5A.
Figure 5C shows a perspective view of the pillar of the canopy of Figure 2, where the first guidance channel and the second guidance channel are shaded.
Figure 6 shows several details of one of the main beams of the canopy of Figure 2.
Figure 7 shows a canopy according to the invention before being embedded in the ground, showing the ground foundation and the buried water and electricity manholes.
Figure 8 shows the canopy of Figure 2, but where the electrical wiring route associated with the photovoltaic modules has been schematically represented, as well as a detail of the same.
Figure 9A shows a perspective view of another embodiment of the canopy of the invention.
Figure 9B shows a side view of the canopy of Figure 9B but with the pillar compartment open.
Figure 10 shows a perspective view of another embodiment of the canopy of the invention.
Figure 11 shows a perspective view of another embodiment of the canopy according to the invention.

### DETAILED DISCLOSURE OF THE INVENTION

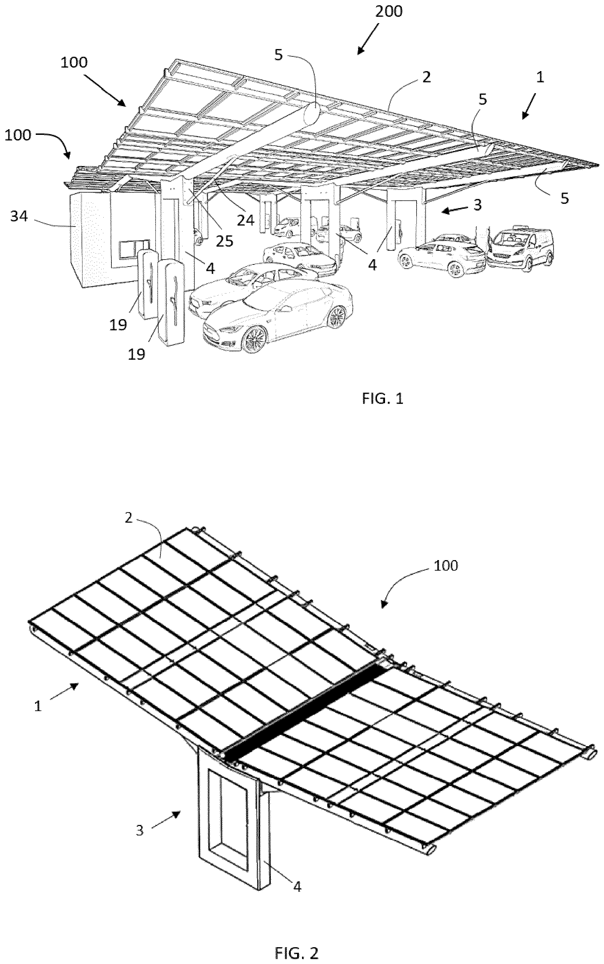

Figure 2 shows a perspective view of a first embodiment of the canopy 100 according to the invention and figure 1 shows an example of a use of the canopy 100 of the invention, wherein said use is directed to a car parking for vehicles, preferably motorised vehicles. In the non-limiting example of figure 1, the vehicle car parking comprises two canopies 100 arranged in parallel, but it could be possible to place as many canopies as desired, either in parallel or in series, to create a larger parking area, for example, to accommodate a fleet of vans, buses, and/or trucks.

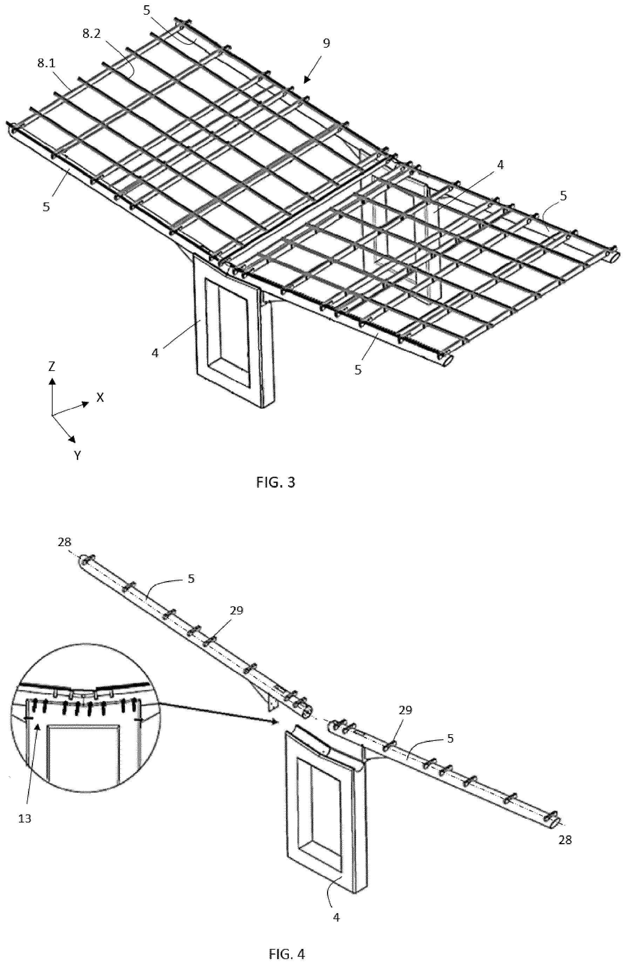

The canopy 100 of the invention comprises a cover 1 comprising a plurality of photovoltaic modules 2 and an electrical wiring 2.1 associated with said photovoltaic modules 2. Optionally, the cover 1 may also comprise non-photovoltaic decorative modules interleaved between the plurality of photovoltaic modules 2. The canopy 100 also comprises a support structure 3 on which the cover1 rests and which comprises at least one pillar 4 raising the cover 1 with respect to ground level. The cover 1 comprises at least one main arm 5 fixed to the pillar 4 and a plurality of profiles 8.1 and 8.2 fixed to said main arm 5 forming a skeleton 9 supporting the plurality of photovoltaic modules 2, some profiles 8.1 being arranged according to a transverse direction to a longitudinal axis 28 of the main arm 5 and being fixed to said main arm 5, and other profiles 8.2 being arranged parallel to the longitudinal axis 28 of the main arm 5 fixed to the transverse profiles 8.1. As shown in the non-limiting image of figure 4, the main arm 5 of the invention comprises a plurality of guide supports 29, preferably U-shaped, for allowing to guide and fix the transverse profiles 8.1 to the corresponding main arm 5.

The pillar 4 is a monoblock piece of reinforced concrete comprising an inner wiring channel 6 with an inlet 6.1 at the top and at least one outlet 6.2. The electrical wiring 2.1 passes through the pillar 4 through said wiring channel 6.

With the canopy 100 of the invention, apart from sheltering vehicles and/or persons from the sun and rain, it is possible to generate electrical energy, either for the use of the canopy 100 itself, to recharge electric vehicles parked in the canopy 100 and/or to distribute the surplus energy generated by the photovoltaic modules 2, in an ergonomic, clean and efficient manner. Likewise, the canopy 100 of the invention is a safe canopy 100 as the photovoltaic modules 2 are electrically insulated thanks to the reinforced concrete pillar 4 and the electrical wires 2.1 associated with said photovoltaic modules 2 are protected inside the pillar 4, preventing users from accessing the electrical wiring 2.1, minimising the risk of accidents and sabotage.

On the other hand, the fact that pillar 4 is a monoblock makes it easier to transport it and to facilitate the assembly of the canopy, as will be explained further below.

In the non-limiting example of figure 2, the cover 1 of the canopy 100 comprises two facing main arms 5 attached to the same pillar 4, forming a double-wing roof, and furthermore the canopy 100 comprises two pillars 4, the plurality of transverse 8.1 and non-transverse 8.2 profiles being arranged between two pillars 4 attached to respective main arms 5, as shown in more detail in figure 3.

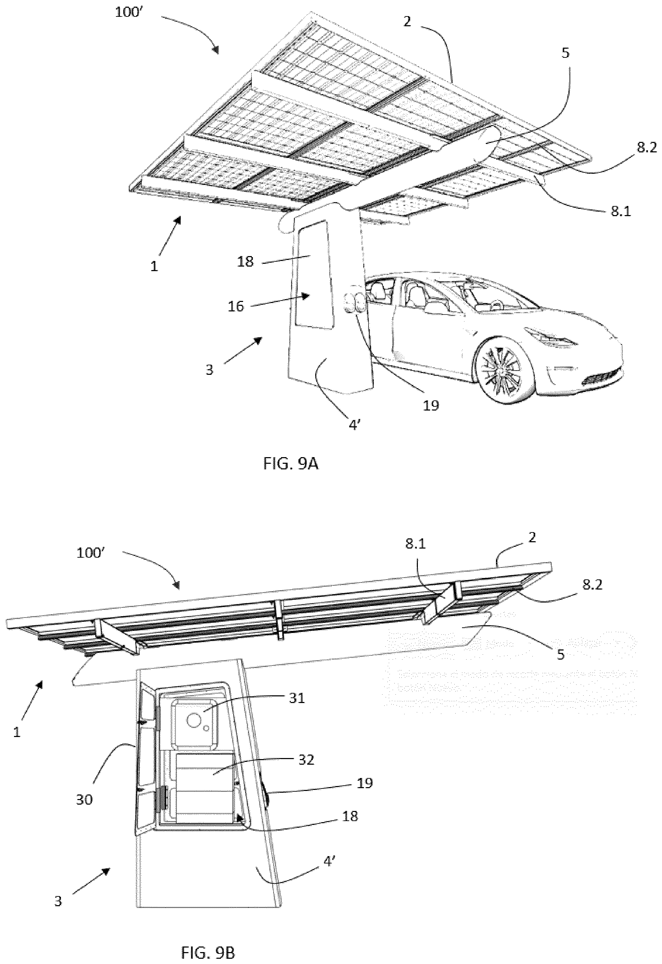

Figure 9A shows another embodiment of the canopy 100' according to the invention, wherein the supporting structure 3 comprises a single pillar 4' and the cover 1 comprises a single main arm 5 attached to said pillar 4', forming a one-wing roof.

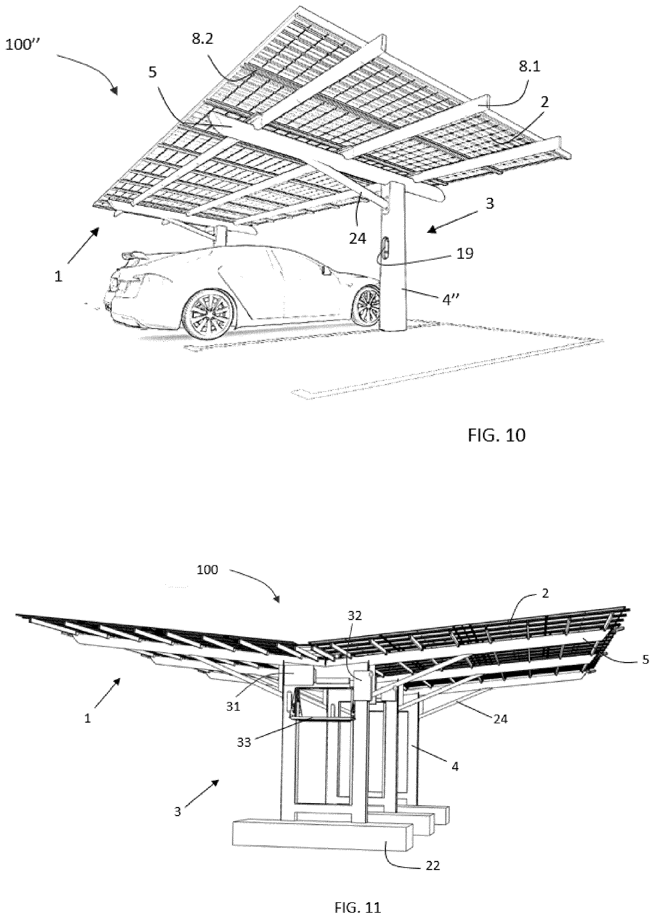

Figure 10 shows another embodiment of the canopy 100", wherein the supporting structure 3 comprises two pillars 4" and the cover 1 comprises two main arms 5, each main arm 5 being attached to a respective pillar 4', forming in this case a single-wing roof.

In general, the number of pillars and the number of main arms 5 to be used for each canopy is not limitative. That is to say, each canopy, according to any of the embodiments of the invention, may comprise as many pillars and as many main arms 5 as desired, bearing in mind that if the canopy 100, 100' or 100" is single wing, each pillar 4, 4' or 4" will be associated with one main arm 5 and if the canopy 100, 100' or 100" is double wing, each pillar 4, 4' or 4" will be associated with two main arms 5.

As already mentioned, it is possible to place several canopies 100, 100' or 100" forming rows and/or columns giving rise to a set 200 of canopies that can form a carport, car park, etc. of larger dimensions, as shown in figure 1.

The canopy 100 according to the preferred embodiment of the invention is embedded in the ground, although it is not necessary for it to be embedded. Depending on the location of the canopy in use (area prone to strong winds, etc.) and the size of the canopy 100 the anchoring requirements of the canopy 100 will be decided.

The pillar of the invention comprises a main body 17 which may comprise an inverted U-shape, rectangular or trapezoidal shape, and may have a central recess 16 to create a space or compartment 18 where electrical components, such as an electrical control panel 31 and/or an inverter 32, can be installed, as shown in figure 9B, thus protecting and safeguarding the equipment. The main body 17 may also be cylindrical or even tubular.

In the preferred embodiment of the invention the main body 17 of the pillar 4 of the canopy 100 is rectangular and comprises the central recess 16, resembling an "0" configuration. When the canopy 100 in use is embedded, the ground foundation can cover the lower part of the main body 17, giving the impression of an inverted U-shaped main body 17. In this non-limiting example, therefore, the main body 17 comprises two reinforced concrete columns joined at the top and bottom. When the canopy 100 is in use and the lower part of the main body is embedded and therefore hidden, users can walk between the two columns of the main body 17, as in a pillar with an inverted U-shaped main body 17. The rectangular-shaped main body 17, i.e. with the upper and lower part joined together, facilitates the transport of the pillar 4 compared to an inverted U-shaped pillar, as it is more robust and avoids deformations caused during transport.

The pillar of the invention, whatever its shape, comprises means for being fixed to a footing 22 of the ground foundation or to other attachment means. However, not all pillars need to be fixed to a footing 22 or foundation. In smaller canopies, such as those shown for example in Figure 9A, they are not embedded, and therefore do not require foundations or footings.

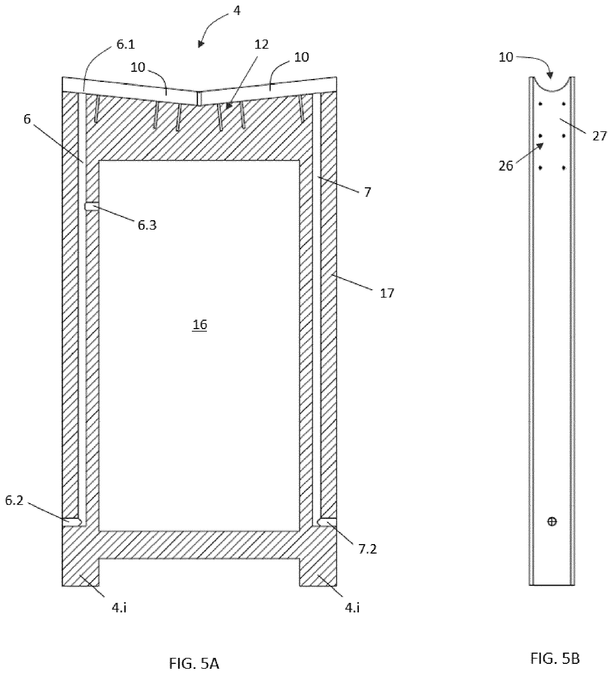

To facilitate anchoring of the canopy 100, each pillar 4 may optionally comprise two legs 4.i, one for each column, as shown in the non-limiting example of Figures 5A, 5C, 7 and 11, to facilitate attachment to the footings 22 of the foundation.

The pillar 4' of the canopy 100' of the non-limiting example of figure 9A comprises a trapezoidal shape and also comprises the recess 16. This type of pillar 4' can be used for example in canopies 100' of smaller dimensions or where the fixing requirement is not very high. In the recess 16 of this pillar 4' it is possible to provide a compartment 18, for example by adding access doors 30 in the pillar 4', as shown in figure 9B.

The main body 17 of the pillar 4" of the canopy 100" of the non-limiting example of figure 10 does not include the central recess 16, said main body 17 being formed by a single column, in this case a solid one.

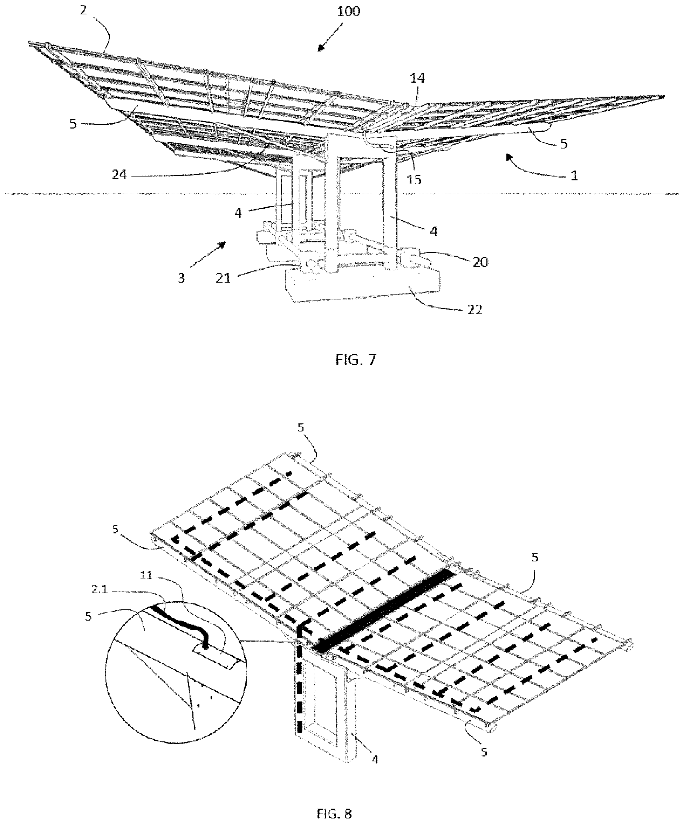

The pillar 4, 4' or 4" according to any of the embodiments of the invention, comprises an upper housing 10 in which an end of the corresponding main arm 5 is guided and fixed, as shown in Figures 4, 5A and 5B. Said housing 10 may be inclined to provide the roof of the canopy of the invention with the desired inclination. The main arm 5 is metallic, preferably made of steel and more preferably of painted primed S275, and is tubular. The inlet 6.1 of the wiring channel 6 of the corresponding pillar 4, 4' or 4" is located in said housing 10, so that from the housing 10 there is access to the corresponding wiring channel 6. The main arm 5 comprises a first opening 11.1 through which the electrical wiring 2.1, which is preferably housed inside a corrugated tube, is inserted into the main arm 5, and a second opening facing the inlet 6.1 of the wiring channel 6, not shown in the figures, through which the electrical wiring 2.1 is introduced into the wiring channel 6, as can be seen in the detail of figure 8. That is to say, the electrical wiring 2.1 passes through the corresponding main arm 5 to access the wiring channel 6 of the corresponding pillar 4, 4' or 4".

Figure 8 shows a schematic representation of the route of the electrical wiring 2.1 associated with the photovoltaic modules 2 of the cover 1 of the canopy 100 of the preferred embodiment of the invention. As can be seen in this figure, the photovoltaic modules 2 of the cover 1 of the same row are connected in series and in parallel with the photovoltaic modules 2 of an adjacent row, with all the wiring being routed towards the wiring channel 6 through the main arm 5. In this way, the electrical wiring 2.1 is hidden and/or protected, both by the main arm 5 and by the pillar 4. Obviously, the connection between the photovoltaic modules 2 can vary depending on the desired requirements.

Continuing with the example of the preferred embodiment of the invention, the pillar 4 comprises means enabling the corresponding main arm 5 to be fixed quickly and efficiently. Said means comprise a plurality of embedded nuts 12, said nuts 12 being accessible from the housing 10. The main arm 5 is fixed to the pillar 4 by means of screws 13 which are screwed into the embedded nuts 12 of the pillar 4.

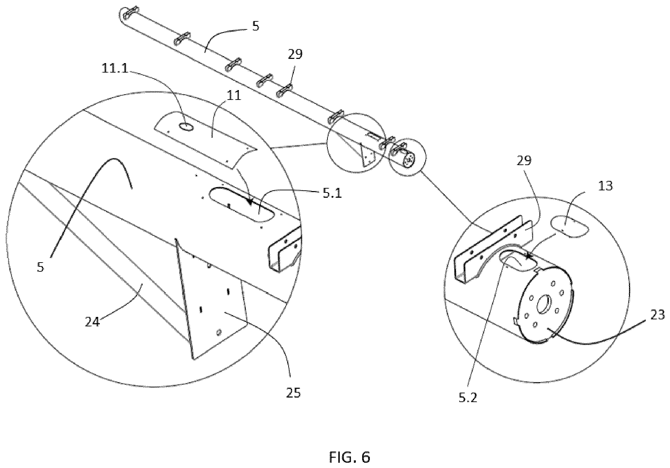

The main arm 5, according to the preferred embodiment of the invention, comprises an access window 5.1, as shown in figure 6, which allows access to the interior of the main arm 5, thus making it possible to screw the screws 13 into the nuts 12 embedded in the pillar 4. Likewise, the main arm 5 according to the preferred embodiment of the invention also comprises a removable cover 11 which covers and seals the action window 5.1, the first opening 11.1 being preferably arranged in said cover 11, as shown in figure 6. Optionally, the opening 11.1 could be arranged at a point further away from the main arm 5.

When the canopy 100 comprises two wings, as in the non-limiting example of the embodiment shown in Figure 2, two main arms 5 are fixed to the pillar 4 facing each other, each main arm 5 being housed in a respective housing 10 of the pillar 4, as shown for example in Figures 4 or 5A. In this case, each main arm 5 is fixed to the pillar 4 as detailed above, but in addition, both main arms 5 are also fixed to each other. To enable this union, the end of each main arm 5 comprises a cross wall 23 with a plurality of holes 24, as shown in figure 6, both cross walls 23 being configured to be joined by means of screws and nuts. Likewise, each main arm 5 also comprises an additional access window 5.2, next to the cross wall 23, which also allows access to the interior of the main arm 5, but in this case to allow the fixing of the corresponding screws and nuts that will allow the two main arms 5 to be fixed to each other. Each main arm 5 comprises another removable cover 13 which covers and seals the additional access window 5.2.

The main arm 5 comprises a tubular body, the guide supports 29 being permanently attached to the tubular body, for example by welding. Optionally, the main arm 5 may also comprise a reinforcement that reinforces the main arm 5, which is very advantageous when the cantilevered section of the main arm 5 is larger than the section of the main arm 5 that is supported and fixed in the housing 10 of the pillar 5. Said reinforcement comprises a plate 25 protruding from the tubular body and cooperating with a lateral housing 27 of the pillar 4, and a tie rod 24, one end of said tie rod 24 being permanently attached to the tubular body and the other end to the plate 25, for example by welding, so that a triangle is generated between the tubular body, the plate 25 and the tie rod 24.

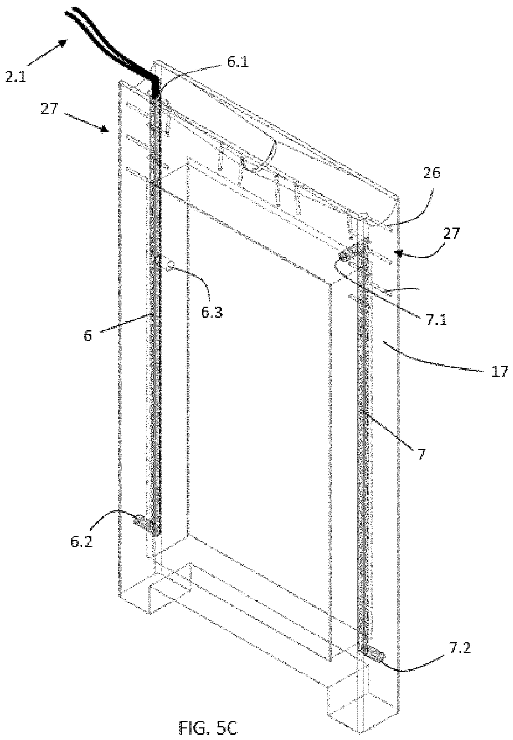

To facilitate the assembly of the canopy 100, the lateral housing 27 of the pillar 4 also comprises embedded threads 26 that allow the plate 25 to be screwed to the corresponding lateral housing 27 by screwing respective screws. If the canopy 100 is a double wing canopy and two main arms 5 are attached to each pillar 4, as is the case in the preferred embodiment shown in Figure 2, the pillar 4 will comprise two lateral housings 27, one on each side of the pillar 4, as shown in Figure 5C, for example.

The cover 1 of the preferred embodiment of the invention comprises a main drainage gutter 14, as shown in figure 7, into which the water collected on the cover 1 flows and which is guided towards said main drainage gutter 14 through the plurality of profiles 8.1 and 8.2 forming the skeleton 9. The pillar 4, according to the preferred embodiment of the invention, comprises an interior drainage channel 7 with an inlet 7.1 at the top and an outlet 7.2, the main drainage gutter 14 being communicated with said inlet 7.1 through a connecting conduit 15, as shown in figure 7, so that the water accumulated in the main drainage gutter14 crosses the pillar 4 through said drainage channel 7 to be evacuated.

The drainage channel 7 comprises a PVC pipe, or similar material, to prevent water seepage into the reinforced concrete.

In the preferred embodiment of the invention, the pillars 4 of the canopy 100 are embedded in the ground and the outlet 7.2 of the drainage channel 7 is configured to communicate fluidly with a manhole 20 of the sewerage network, so that it is possible to transport the water filtered from the roof and accumulated in the main drainage gutter 14 to another place for its evacuation or treatment. Said sewage system and said manhole 20 can therefore be buried underground so that they are hidden from users.

Similarly, the outlet 6.2 of the wiring channel 6 is also configured to communicate with an electrical network manhole 21 to be able to distribute the energy extracted from the photovoltaic modules 2 in the event of surplus energy. Said electrical network and manhole 21 can also be buried underground so that they can also be hidden from users.

Optionally, the wiring channel 6 of the pillar of the invention may comprise another outlet 6.3 configured to allow harnessing the energy extracted from the photovoltaic modules 2 in the vicinity of the canopy of the invention, so as to enable the electrical wiring 2.1 associated with the photovoltaic modules 2 can interact with electrical and/or electronic equipment, for example an electrical control panel 31 and/or an inverter 32, arranged in the canopy or in a cabin 34 close to the canopy, for example to electrically power lighting means, to create AC power outlets and/or to create charging points 19 for electric vehicles. In the non-limiting example of figure 10, the charging points 19 are arranged directly on the pillars 4" of the canopy 100", being integrated in said pillars 4", however, in the canopy 100 of the non-limiting example of figure 1 the charging points 19 are not integrated in the pillars 4.

The photovoltaic modules 2 generate direct current DC and the inverters 32 enable the conversion of this DC current to alternating current AC. Therefore, when distributing the surplus energy from the photovoltaic modules 2 via the manhole 21 and the distribution network, it could be distributed as DC or AC current.

In the event that the canopy 100, 100' or 100' comprises more than one pillar 4, 4' or 4", not all pillars 4, 4' or 4" need interact with electrical and/or electronic equipment arranged in said canopy, so that it would be sufficient for the wiring channel 6 of one of the pillars 4, 4' or 4" to comprise the additional outlet 6.3 to allow interaction with the electrical and/or electronic equipment. Furthermore, through the electrical network and the corresponding manholes 21 all the pillars of the canopy can be electrically connected.

If the electrical and/or electronic equipment arranged in the corresponding canopy 100, 100' or 100" is arranged at a considerable height from the ground, the pillar 4, 4' or 4" could comprise a scaffold 33 close to such equipment to facilitate the handling of such equipment, as shown in figure 11. The canopy 100 of the example shown in figure 11 comprises three pillars 4, the top of each pillar 4 being provided with an electrical control panel 31, an inverter 32 and a scaffold 33 to facilitate access to the electrical control panel 31 and the inverter 32. However, in another variant of the invention only one of the pillars 4 comprises the scaffolding 33, the electrical control panel 31 and the inverter 32. In figure 11 the connection of each pillar 4 to a corresponding footing 22 has been schematically represented before adding the foundation that will hide said footing 22 and the lower part of the pillar 4.

On the other hand, in canopies 100' with pillars 4' comprising compartment 18 in recess 16, such as the trapezoidal pillar 4' of the non-limiting example of Figures 9A and 9B, electrical and/or electronic equipment (e.g. electrical control panels 31 and/or inverters 32) could be arranged in said compartment 18, thus keeping said equipment under lock and key by incorporating lateral doors 30.

By channelling the downpipes of water and electrical wiring 2.1 through the inside of the pillar of the invention, it is possible to keep the surroundings of the canopy clean, dry and safe.

The canopy 100 of the preferred embodiment of the invention, the canopy 100' of the example of figures 9A and 9B and the canopy 100" of the example of figure 10 are the same, except for the shape of the pillars.

## Claims

1. Canopy comprising
- a cover (1) comprising a plurality of photovoltaic modules (2) and electrical wiring (2.1) associated with said photovoltaic modules (2), and
- a supporting structure (3) on which the cover (1) rests, comprising at least one pillar (4; 4'; 4"),
comprising the cover (1) at least one main arm (5) fixed to the pillar (4; 4'; 4") and a plurality of profiles (8.1, 8.2) fixed to said main arm (5) forming a skeleton (9) supporting the plurality of photovoltaic modules (2),
**characterised in that** the pillar (4; 4'; 4") is a monobloc piece of reinforced concrete comprising an interior wiring channel (6) with an inlet (6.1) at the top and at least one outlet (6.2, 6.3), the electrical wiring passing through said pillar (4; 4'; 4") through the wiring channel (6).

2. Canopy according to claim 1, wherein the main arm (5) is tubular and the pillar (4; 4'; 4") comprises a housing (10) in which one end of said main arm (5) is guided and fixed, the inlet (6.1) of the wiring channel (6) being in said housing (10), and the main arm (5) comprising a first opening (11.1) through which the electrical wiring (2.1) is introduced into the main arm (5), and a second opening opposite the inlet (6.1) of the wiring channel (6) through which the electrical wiring (2.1) is introduced into the wiring channel (6).

3. Canopy according to claim 2, wherein the pillar (4; 4'; 4") comprises in the housing (10) a plurality of embedded nuts (12), and the main arm (5) is fixed to the pillar (4; 4'; 4") by screws (13) screwed into said nuts (12), the main arm (5) comprising an access window (5.1) for screwing the screws (13).

4. Canopy according to claim 3, wherein the main arm (5) comprises a cap (11) covering the access window (5.1), the cap (11) comprising the first opening (11.1).

5. Canopy according to claim 4, wherein the end of the main arm (5) comprises a cross wall (23) with a plurality of holes configured to be fixed by screws and nuts to the end of another main arm (5), further comprising an additional access window (5.2) close to the cross wall (23) to allow the screws and nuts to be fixed, and a cap (13) covering the additional access window (5.2).

6. Canopy according to any of the preceding claims, wherein the canopy (1) comprises a main drainage gutter (14) into which the water collected on the canopy (1) flows and which is guided towards said main drainage gutter (14) through the plurality of profiles (8.1, 8.2) forming the skeleton (9), the pillar (4; 4'; 4") comprising an interior drainage channel (7) with an inlet (7.1) at the top and an outlet (7.2), the water passing through said pillar (4; 4'; 4") through the drainage channel (7), the main drainage gutter (14) being connected to said inlet (7.1) by means of a connecting conduit (15).

7. Canopy according to claim 6, wherein the drainage channel (7) comprises a PVC pipe.

8. Canopy according to any of claim 6 or 7, wherein the outlet (7.2) of the drainage channel (7) is configured to communicate fluidly with a manhole 20 of the sewage network so that it is possible to transport the filtered water from the cover (1) to another place for its evacuation.

9. Canopy according to any of the previous claims, where the outlet (6.2) of the wiring channel (6) is configured to communicate with an electrical network manhole (21) to be able to distribute the energy extracted from the photovoltaic modules (2).

10. Canopy according to any of the preceding claims, wherein the wiring channel (6) of the pillar (4; 4'; 4") comprises another outlet (6.3) configured to harness the energy extracted from the photovoltaic modules (2) in the vicinity of the canopy (100), so that the electrical wiring (2.1) associated with the photovoltaic modules (2) can interact with electrical and/or electronic equipment located in the canopy (100) to, for example, electrically power lighting means, create AC sockets and/or create charging points (19) for electric vehicles.

11. Canopy according to any of the preceding claims, wherein the pillar (4; 4') comprises a main body (17) in an inverted U, rectangular or trapezoidal shape with a central recess (16).

12. Canopy according to claim 11, wherein the pillar (4; 4') comprises an inner compartment (18) arranged in the recess (16).

13. Canopy according to any of the preceding claims, wherein the lower part of the pillar (4; 4'; 4") is embedded in the ground.

14. Canopy according to any of the preceding claims, wherein the cover (1) comprises two main arms (5) facing each other fixed to the same pillar (4; 4'; 4"), forming a double-wing roof.

15. Canopy according to any of the preceding claims, comprising at least two pillars (4; 4'; 4"), the plurality of profiles (8.1, 8.2) being arranged between two pillars (4; 4'; 4") attached to respective main arms (5).

## Amended claims

### Amended claims in accordance with Rule 137(2) EPC.

1. Canopy comprising
- a cover (1) comprising a plurality of photovoltaic modules (2) and electrical wiring (2.1) associated with said photovoltaic modules (2), and
- a supporting structure (3) on which the cover (1) rests, comprising at least one pillar (4; 4'; 4"),
comprising the cover (1) at least one main arm (5) fixed to the pillar (4; 4'; 4") and a plurality of profiles (8.1, 8.2) fixed to said main arm (5) forming a skeleton (9) supporting the plurality of photovoltaic modules (2),
the pillar (4; 4'; 4") being a monobloc piece of reinforced concrete comprising an interior wiring channel (6) with an inlet (6.1) at the top and at least one outlet (6.2, 6.3), the electrical wiring passing through said pillar (4; 4'; 4") through the wiring channel (6), **characterised in that** the main arm (5) is tubular and the pillar (4; 4'; 4") comprises a housing (10) in which one end of said main arm (5) is guided and fixed, the inlet (6.1) of the wiring channel (6) being in said housing (10), and the main arm (5) comprising a first opening (11.1) through which the electrical wiring (2.1) is introduced into the main arm (5), and a second opening opposite the inlet (6.1) of the wiring channel (6) through which the electrical wiring (2.1) is introduced into the wiring channel (6).

2. Canopy according to claim 1, wherein the pillar (4; 4'; 4") comprises in the housing (10) a plurality of embedded nuts (12), and the main arm (5) is fixed to the pillar (4; 4'; 4") by screws (13) screwed into said nuts (12), the main arm (5) comprising an access window (5.1) for screwing the screws (13).

3. Canopy according to claim 2, wherein the main arm (5) comprises a cap (11) covering the access window (5.1), the cap (11) comprising the first opening (11.1).

4. Canopy according to claim 3, wherein the end of the main arm (5) comprises a cross wall (23) with a plurality of holes configured to be fixed by screws and nuts to the end of another main arm (5), further comprising an additional access window (5.2) close to the cross wall (23) to allow the screws and nuts to be fixed, and a cap (13) covering the additional access window (5.2).

5. Canopy according to any of the preceding claims, wherein the cover (1) comprises a main drainage gutter (14) into which the water collected on the cover (1) flows and which is guided towards said main drainage gutter (14) through the plurality of profiles (8.1, 8.2) forming the skeleton (9), the pillar (4; 4'; 4") comprising an interior drainage channel (7) with an inlet (7.1) at the top and an outlet (7.2), the water passing through said pillar (4; 4'; 4") through the drainage channel (7), the main drainage gutter (14) being connected to said inlet (7.1) by means of a connecting conduit (15).

6. Canopy according to claim 5, wherein the drainage channel (7) comprises a PVC pipe.

7. Canopy according to any of claim 5 or 6, wherein the outlet (7.2) of the drainage channel (7) is configured to communicate fluidly with a manhole 20 of the sewage network so that it is possible to transport the filtered water from the cover (1) to another place for its evacuation.

8. Canopy according to any of the previous claims, where the outlet (6.2) of the wiring channel (6) is configured to communicate with an electrical network manhole (21) to be able to distribute the energy extracted from the photovoltaic modules (2).

9. Canopy according to any of the preceding claims, wherein the wiring channel (6) of the pillar (4; 4'; 4") comprises another outlet (6.3) configured to harness the energy extracted from the photovoltaic modules (2) in the vicinity of the canopy (100), so that the electrical wiring (2.1) associated with the photovoltaic modules (2) can interact with electrical and/or electronic equipment located in the canopy (100) to, for example, electrically power lighting means, create AC sockets and/or create charging points (19) for electric vehicles.

10. Canopy according to any of the preceding claims, wherein the pillar (4; 4') comprises a main body (17) in an inverted U, rectangular or trapezoidal shape with a central recess (16).

11. Canopy according to claim 10, wherein the pillar (4; 4') comprises an inner compartment (18) arranged in the recess (16).

12. Canopy according to any of the preceding claims, wherein the lower part of the pillar (4; 4'; 4") is embedded in the ground.

13. Canopy according to any of the preceding claims, wherein the cover (1) comprises two main arms (5) facing each other fixed to the same pillar (4; 4'; 4"), forming a double-wing roof.

14. Canopy according to any of the preceding claims, comprising at least two pillars (4; 4'; 4"), the plurality of profiles (8.1, 8.2) being arranged between two pillars (4; 4'; 4") attached to respective main arms (5).
